(19) Europäisches Patentamt
European Patent Office
Office européen des brevets

(11) **EP 4 510 206 A1**

(12) **EUROPEAN PATENT APPLICATION**
published in accordance with Art. 153(4) EPC

(43) Date of publication:
**19.02.2025 Bulletin 2025/08**

(21) Application number: **22954216.2**

(22) Date of filing: **08.08.2022**

(51) International Patent Classification (IPC):
**H01M 4/13** (2010.01)     **H01M 4/62** (2006.01)
**H01M 10/0525** (2010.01)

(52) Cooperative Patent Classification (CPC):
**H01M 4/13;** H01M 4/62; H01M 10/0525

(86) International application number:
**PCT/CN2022/110842**

(87) International publication number:
**WO 2024/031236 (15.02.2024 Gazette 2024/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **YAN, Qingwei
Ningde, Fujian 352100 (CN)**
• **WANG, Jiazheng
Ningde, Fujian 352100 (CN)**
• **DONG, Xiaobin
Ningde, Fujian 352100 (CN)**
• **XU, Heke
Ningde, Fujian 352100 (CN)**

(74) Representative: **Kraus & Lederer PartGmbB
Thomas-Wimmer-Ring 15
80539 München (DE)**

(54) **SECONDARY BATTERY, BATTERY, AND ELECTRIC DEVICE**

(57)     The present application relates to a secondary battery, a battery, and a power consuming device, the secondary battery comprises an electrode assembly, and the electrode assembly comprises: at least one positive electrode sheet and at least one negative electrode sheet, a negative electrode film layer of the at least one negative electrode sheet having a nonreactive region thereon, the nonreactive region being not opposite a positive electrode film layer on the positive electrode sheet disposed adjacent to the negative electrode sheet where the nonreactive region is located, and the at least one nonreactive region being provided with a prelithiation layer; wherein total capacity of the secondary battery is Q, total capacity from prelithiation of all the prelithiation layers is $Q_{Li}$, and $Q_{Li}$ meets the following condition: $0.5\% Q \leq Q_{Li} \leq 10\% Q$. The secondary battery, the battery, and the power consuming device provided in the present application have high initial coulombic efficiency, cycling performance, and storage performance.

*FIG. 4*

## Description

### Technical Field

The present application relates to the technical field of batteries, and more particularly to a secondary battery, a battery, and a power consuming device.

### Background Art

In recent years, with an increasingly wide application range of lithium-ion batteries, the lithium-ion batteries are widely used in energy storage power systems such as hydroelectric, thermal, wind and solar power stations, as well as power tools, electric bicycles, electric motorcycles, electric vehicles, military equipment, aerospace and other fields. Due to the great development of lithium-ion batteries, higher requirements have also been placed on their initial coulombic efficiency, cycling performance, storage performance, etc.

When a lithium-ion battery begins to be charged for the first time, lithium ions from its positive electrode sheet are intercalated in its negative electrode sheet. However, some of the lithium ions intercalated on the negative electrode sheet hardly return to the positive electrode sheet during discharging. This causes irreversible lithium loss to the positive electrode sheet, deteriorating the initial coulombic efficiency, cycling performance, and storage performance of a battery cell. Therefore, existing lithium-ion batteries still need to be improved in terms of initial coulombic efficiency, cycling performance, and storage performance.

### Summary of the Invention

In view of the above issues, the present application provides a secondary battery, a battery, and a power consuming device, enabling improvement in the initial coulombic efficiency, cycling performance, and storage performance for the secondary battery, battery, and power consuming device.

In a first aspect, the present application provides a secondary battery including an electrode assembly, and the electrode assembly includes: at least one positive electrode sheet and at least one negative electrode sheet, a negative electrode film layer of the at least one negative electrode sheet having a nonreactive region thereon, the nonreactive region being not opposite a positive electrode film layer on the positive electrode sheet disposed adjacent to the negative electrode sheet where the nonreactive region is located, and the at least one nonreactive region being provided with a prelithiation layer;

wherein total capacity of the secondary battery is Q, total capacity from prelithiation of all the prelithiation layers is $Q_{Li}$, and $Q_{Li}$ meets the following condition:

$$0.5\%Q \leq Q_{Li} \leq 10\%Q.$$

In the present application, a lithium source is placed on a surface of a negative electrode film layer of a nonreactive region and forms a prelithiation layer before priming. There is a potential difference of about 3 V between lithium on the prelithiation layer and a forming material of the negative electrode film layer overlapping the prelithiation layer, such as graphite or silicon-carbon material, and a voltage of the lithium is below that of the forming material of the negative electrode film layer with no lithium intercalated that bears the lithium. Since the prelithiation layer is in tight attachment to the nonreactive region of the negative electrode film layer bearing the prelithiation layer after priming of a secondary battery 12, an electric circuit forms between the prelithiation layer and the negative electrode film layer bearing the same, which equals a state of direct short circuit (in which the prelithiation layer is a negative electrode, and the negative electrode film layer bearing the prelithiation layer is a positive electrode). Under the action of the potential difference between them, the lithium in the prelithiation layer can lose electrons and become freely moving lithium ions intercalated in the negative electrode film layer bearing the prelithiation layer, and can form LiCx ($x \geq 6$) with C (carbon) in the negative electrode film layer and/or form LixSiy ($x > 0$, $y > 0$) with Si (silicon) in the negative electrode film layer bearing the prelithiation layer. In this case, the original prelithiation layer, LiCx and/or LixSiy combine to form a new stable prelithiation layer.

The new stable prelithiation layer has a low potential. Since the lithium ions are intercalated from a low potential region to a high potential region, the new stable prelithiation layer can thus effectively block the lithium ions of a reactive region on the same negative electrode sheet from dispersing and intercalating to the nonreactive region during charging, while the potential of the reactive region of the negative electrode sheet rises gradually during discharging. At this point, the potential of the reactive region is far higher than that of the nonreactive region. The lithium ions in the new stable prelithiation layer can be driven by this potential difference to disperse to the reactive region at a low speed, thus improving the initial coulombic efficiency, cycling performance, and storage performance of the secondary battery.

In some embodiments, the prelithiation layer is a layer of elemental lithium metal.

The prelithiation layer made of lithium alloys such as silicon-lithium alloy, aluminum-lithium alloy, magnesium-lithium alloy, and tin-lithium alloy has a relatively lower gram capacity of the lithium alloys, may produce metal impurities after deintercalation of lithium, and has a risk of worsening safety of the secondary battery. Lithium metal element in the layer of elemental lithium metal has a high theoretical gram capacity with little residue occurring after reaction. This can improve first efficiency, cycling and storage performances of the secondary battery without reducing energy density of the secondary battery.

In some embodiments, $Q_{Li}$ meets the following condition: $2\%Q \leq Q_{Li} \leq 6\%Q$.

With the foregoing in mind, it is preferable to control the prelithiation amount of the prelithiation layer within: a range of $2\%Q \leq Q_{Li} \leq 6\%Q$. Within the range of $2\%Q \leq Q_{Li} \leq 6\%Q$, the initial coulombic efficiency, cycling performance, and storage performance of the secondary battery can be improved, and further, the prelithiation layer has a high utilization rate.

In some embodiments, the electrode assembly includes a separator, and the electrode assembly is configured as a stack structure formed by stacking positive electrode sheets, the separator, and negative electrode sheets;

among all the positive electrode sheets and all the negative electrode sheets, a surface of an outermost negative electrode film layer in the outermost negative electrode sheet forms a nonreactive region, and a prelithiation layer covers the nonreactive region.

With the outermost negative electrode film layer in the outermost negative electrode sheet provided with the prelithiation layer and the prelithiation layer covering the nonreactive region, prelithiation area of the prelithiation layer can be effectively expanded, enabling higher initial coulombic efficiency, cycling performance, and storage performance for the electrode assembly with the stack structure.

In some embodiments, the electrode assembly includes a separator, and the electrode assembly is configured as a winding structure formed by winding positive electrode sheets, the separator, and negative electrode sheets;

the electrode assembly includes a starting winding segment and an ending winding segment, among all the positive electrode sheets and all the negative electrode sheets 1232 of the starting winding segment, a surface of an innermost negative electrode film layer in the innermost negative electrode sheet, and/or, among all the positive electrode sheets and all the negative electrode sheets of the ending winding segment, a surface of an outermost negative electrode film layer in the outermost negative electrode sheet, forms a nonreactive region, and the nonreactive region on at least one of the starting winding segment and the ending winding segment is provided with a prelithiation layer.

In this embodiment, both the starting winding segment and the ending winding segment of the electrode assembly are possibly provided with a nonreactive region. The more nonreactive region sites, the more conducive to distribution of the prelithiation layer, so that it may be possible to select positions for setting the prelithiation layer as desired.

In some embodiments, each nonreactive region in the starting winding segment and the ending winding segment is provided with a prelithiation layer, total capacity from prelithiation of all the prelithiation layers arranged on the starting winding segment is $Q_1$, total capacity from prelithiation of all the prelithiation layers arranged on the ending winding segment is $Q_2$, where $Q_{Li} = Q_1 + Q_2$, and $Q_1 > Q_2$.

Since the starting winding segment is positioned at a center of the electrode assembly in contrast to the ending winding segment, the starting winding segment has a far higher electrolyte-retaining capacity than the ending winding segment after being fully impregnated by an electrolyte. In this way, it more facilitates dispersion of lithium ions in the prelithiation layer to further improve the initial coulombic efficiency, cycling performance, and storage performance of a battery cell.

In some embodiments, total area of prelithiation of all the prelithiation layers is $S_{Li}$, capacity per unit area in a negative electrode film layer on a single side of each negative electrode sheet 1232 is $C_{negative}$, and $S_{Li}$ meets the following condition: $Q_{Li}/120\% C_{negative} \leq S_{Li} \leq Q_{Li}/20\% C_{negative}$.

Potential level of the nonreactive region of the negative electrode sheet is directly related to prelithiation area of the nonreactive region. The larger the prelithiation area is, the higher extent a reduction in the potential of the nonreactive region on the negative electrode sheet is at, and then the potential of the whole negative electrode sheet will also be reduced. In this way, there will be a greater potential difference between the negative electrode sheet and the positive electrode sheet disposed adjacent to the same. According to the equation, energy = potential difference * capacity, the greater the potential difference, the higher the energy of a secondary battery. Therefore, the secondary battery with this design has a high energy density.

In some embodiments, $S_{Li}$ meets the following condition: $Q_{Li}/90\% C_{negative} \leq S_{Li} \leq Q_{Li}/50\% C_{negative}$.

Within this range, prelithiation area in the secondary battery is appropriate, utilization rate is high, and the initial coulombic efficiency, cycling performance, and storage performance of the secondary battery can be effectively improved.

In some embodiments, the prelithiation layer includes:

a plurality of first prelithiation units arranged in a spaced manner along a lengthwise direction of the negative electrode sheet where the first prelithiation units are located; and/or
a plurality of second prelithiation units arranged in a spaced manner along a transverse direction of the negative electrode sheet where the second prelithiation units are located.

In this embodiment, there is a gap between any adjacent two of the first prelithiation units and/or between any adjacent two of the second prelithiation units. The arrangement of the gap enables an electrolyte to fully impregnate a nonreactive region. In this way, the prelithiation layer may be intercalated quickly to a negative electrode film layer overlapping the same and form a new stable prelithiation layer. The new stable prelithiation layer may supplement lithium ions slowly, thereby facilitating prolonging service life of the secondary battery.

In some embodiments, each first prelithiation unit extends, along the transverse direction of a negative electrode sheet where it is located, to two opposing edges of the negative electrode sheet.

With this design, space of a nonreactive region can be fully utilized to arrange the first prelithiation unit, such that the first prelithiation unit has a large length, and accordingly, prelithiation capacity of the first prelithiation unit also increases, such that a secondary battery has a good prelithiation effect. In addition, a gap formed between every two adjacent first prelithiation units may further ensure that an electrolyte can provide full impregnation.

In some embodiments, each second prelithiation unit includes a plurality of prelithiation portions, each prelithiation portion is in patch shape, and all the prelithiation portions of each second prelithiation unit are arranged in a spaced manner along the lengthwise direction of a negative electrode sheet where it is located.

In these embodiments, full impregnation of an electrolyte can be further ensured.

In some embodiments, the prelithiation layer is configured as a layer structure continuously extending along the lengthwise direction of a negative electrode sheet where it is located.

In this way, the negative electrode sheet has large prelithiation area, and then there will be a greater potential difference between the negative electrode sheet and the positive electrode sheet disposed adjacent to the same. According to the equation, energy = potential difference * capacity, the greater the potential difference, the higher the energy of a secondary battery; and accordingly, the cycling performance and storage performance of the secondary battery can be improved.

In some embodiments, the prelithiation layer is provided with a plurality of through-holes.

With the plurality of through-holes, it is possible to increase porosity of a negative electrode sheet, such that an electrolyte may provide full impregnation, thereby facilitating prolonging service life of the secondary battery.

In some embodiments, prelithiation area of the prelithiation layer is $S_1$, the sum of cross-sectional areas among all the through-holes in the prelithiation layer is $S_2$, and $S_2$ meets the following condition: $5\%S_1 \leq S_2 \leq 50\%S_1$.

With $S_2$ meeting the following condition: $5\%S_1 \leq S_2 \leq 50\%S_1$, an electrolyte is enabled to provide full impregnation while the prelithiation need can be satisfied, thereby facilitating further improvement in the initial coulombic efficiency, cycling performance, and storage performance of the secondary battery.

In some embodiments, $S_2$ meets the following condition: $20\%S_1 \leq S_2 \leq 30\%S_1$.

In such embodiments, the electrolyte has good impregnating and prelithiation effects.

In a second aspect, the present application provides a battery, including a secondary battery of any one of the embodiments described above.

In a third aspect, the present application provides a power consuming device, including a battery of the embodiments described above, the battery being used to provide electrical energy; or including a secondary battery of any one of the embodiments described above, the secondary battery being used to provide electrical energy.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

**Brief Description of the Drawings**

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference signs throughout the accompanying drawings. In the drawings:

Fig. 1 is a schematic structural diagram of a vehicle according to some embodiments of the present application;
Fig. 2 is an exploded view of a battery according to some embodiments of the present application;
Fig. 3 is an exploded view of a secondary battery according to some embodiments of the present application;
Fig. 4 is a cross-sectional view of an electrode assembly as a winding structure according to some embodiments of the present application;

Fig. 5 is an expanded schematic diagram of a negative electrode sheet of an electrode assembly according to an embodiment shown in Fig. 4;

Fig. 6 is an expanded schematic diagram of a negative electrode sheet of an electrode assembly according to another embodiment shown in Fig. 4;

Fig. 7 is an expanded schematic diagram of a negative electrode sheet of an electrode assembly according to still another embodiment shown in Fig. 4;

Fig. 8 is an expanded schematic diagram of a negative electrode sheet of an electrode assembly according to yet another embodiment shown in Fig. 4.

Reference signs:

1. Vehicle; 10. Battery; 11. Enclosure; 111. First portion; 112. Second portion; 12. Secondary battery; 121. Housing; 122. End cap; 123. Electrode assembly; 1231. Positive electrode sheet; 1232. Negative electrode sheet; 12321. Nonreactive region; 12322. Reactive region; 1233. Separator; 1234. Prelithiation layer; 12341. First prelithiation unit; 12342. Second prelithiation unit; 123421. Prelithiation portion; 12343. Through-hole; 20. Controller; 30. Motor.

## Detailed Description of Embodiments

In order to make the above objectives, features and advantages of the present application more clearly understood, particular embodiments of the present application will be described in detail below with reference to the accompanying drawings. In the following description, numerous specific details are set forth in order to provide a thorough understanding of the present application. However, the present application can be implemented in many other ways different from those described herein, and those skilled in the art can make similar improvements without departing from the essence of the present application. Therefore, the present application is not limited by the particular embodiments disclosed below.

In the description of the present application, it should be understood that the orientation or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and simplification of the description, rather than indicating or implying that the devices or elements referred to must have a specific orientation or be constructed and operated in a described orientation, and therefore cannot be construed as limiting the present application.

In addition, the terms "first" and "second" are used for descriptive purposes only, and cannot be construed as indicating or implying relative importance or implicitly indicating the number of technical features indicated. Therefore, the features defined with "first" and "second" may explicitly or implicitly include at least one of the features. **In** the description of the present application, the meaning of "a plurality of" is at least two, such as two, three and so on, unless otherwise specifically defined.

In the present application, unless otherwise explicitly specified and defined, the terms such as "mounting", "connection", "connected" and "fixing" should be interpreted broadly, for example, either fixed or detachable connection, or integration; or may be a mechanical connection or an electrical connection; or may be a direct connection or an indirect connection through an intermediate medium, or may be communication between interiors of two elements or interaction between two elements, unless it may be clearly defined otherwise. For those of ordinary skill in the art, the specific meanings of the foregoing terms in the present application may be understood according to specific circumstances.

In the present application, unless otherwise explicitly specified and defined, the expression of a first feature being "on" or "under" a second feature may be the case that the first feature is in direct contact with the second feature, or the first feature is in indirect contact with the second feature via an intermediate medium. Moreover, the first feature being "on", "above", and "over" the second feature may be the first feature being directly above or obliquely above the second feature, or simply mean that the first feature is at a higher level than the second feature. The first feature being "under", "below" and "underneath" the second feature may be the first feature being right below or obliquely below the second feature, or only means that the level height of the first feature being less than that of the second feature.

At present, from the perspective of the development of the market situation, batteries are used more and more widely. The batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of batteries, the market demand for the batteries is also expanding.

The application has noted that when charging of a lithium-ion battery begins, lithium ions of a positive electrode sheet are preferentially intercalated in a reaction region of a negative electrode sheet 1232, such that potential of the reactive region is lowered. A potential difference is formed between the reactive region and a nonreactive region of the negative electrode sheet 1232. Lithium ions of the reactive region are dispersed and intercalated to the nonreactive region at a low speed, while lithium ions intercalated in the nonreactive region hardly return to the positive electrode sheet during discharging. This causes irreversible lithium loss to the positive electrode sheet, worsening the initial coulombic efficiency, cycling performance, and storage performance of a battery cell. Therefore, existing lithium-ion batteries still need to be improved in terms of initial coulombic efficiency, cycling performance, and storage performance.

To address the problem that existing lithium-ion batteries are poor in terms of initial coulombic efficiency, cycling performance, and storage performance, the applicant designs, via deep investigation, a secondary battery, and in the secondary battery, an electrode assembly includes: at least one positive electrode sheet and at least one negative electrode sheet 1232, a negative electrode film layer of the at least one negative electrode sheet 1232 having a nonreactive region thereon, the nonreactive region being not opposite a positive electrode film layer on the positive electrode sheet disposed adjacent to the negative electrode sheet 1232 where the nonreactive region is located, and the at least one nonreactive region being provided with a prelithiation layer; wherein total capacity of the secondary battery is Q, total capacity from prelithiation of all the prelithiation layers is $Q_{Li}$, and $Q_{Li}$ meets the following condition: $0.5\%Q \leq Q_{Li} \leq 10\%Q$.

In the same negative electrode sheet 1232, on the same negative electrode film layer provided with a nonreactive region, or on a negative electrode film layer facing away from the negative electrode film layer provided with the nonreactive region, further provided is a reactive region, and the reactive region is disposed opposite a positive electrode film layer on the positive electrode sheet disposed adjacent to the negative electrode sheet 1232 where the reactive region is located. Lithium deintercalation occurs between the reactive region and the positive electrode film layer arranged opposite the same during charging and discharging.

In the present application, a lithium source is placed on a nonreactive region and forms a prelithiation layer before priming. There is a potential difference of about 3 V between lithium on the prelithiation layer and a forming material of the negative electrode film layer overlapping the prelithiation layer, such as graphite or silicon-carbon material, and a potential of the lithium is below that of the forming material of the overlapping negative electrode film layer. Since the prelithiation layer is in tight attachment to the nonreactive region of the negative electrode film layer overlapping the prelithiation layer after priming of a secondary battery, an electric circuit forms between the prelithiation layer and the negative electrode film layer overlapping the same, which equals a state of direct short circuit (in which the prelithiation layer is a negative electrode, and the negative electrode film layer overlapping the prelithiation layer is a positive electrode). Under the action of the potential difference, the lithium in the prelithiation layer can lose electrons and become freely moving lithium ions intercalated in the negative electrode film layer overlapping the prelithiation layer, and can form LiCx ($x \geq 6$) with C (carbon) in the negative electrode film layer and/or form LixSiy ($x > 0$, $y > 0$) with Si (silicon) in the negative electrode film layer overlapping the prelithiation layer. In this case, the original prelithiation layer, LiCx and/or LixSiy combine to form a new stable prelithiation layer.

The new stable prelithiation layer enables a low potential for the nonreactive region. Since the lithium ions are intercalated from a low potential region to a high potential region, the new stable prelithiation layer can thus effectively block the lithium ions of a reactive region on the same negative electrode sheet 1232 from dispersing and intercalating to the nonreactive region during charging, while the potential of the reactive region of the negative electrode sheet 1232 rises gradually during discharging. At this point, the potential of the reactive region is far higher than that of the nonreactive region. The lithium ions in the new stable prelithiation layer can be driven by the potential difference to disperse to the reactive region at a low speed, thus improving the initial coulombic efficiency, cycling performance, and storage performance of the secondary battery.

Furthermore, $Q_{Li}$ meets the following condition: $0.5\%Q \leq Q_{Li} \leq 10\%Q$, total capacity from prelithiation of the prelithiation layer is within this range, the prelithiation effect is good, and the initial coulombic efficiency, cycling performance, and storage performance of the secondary battery can be further improved.

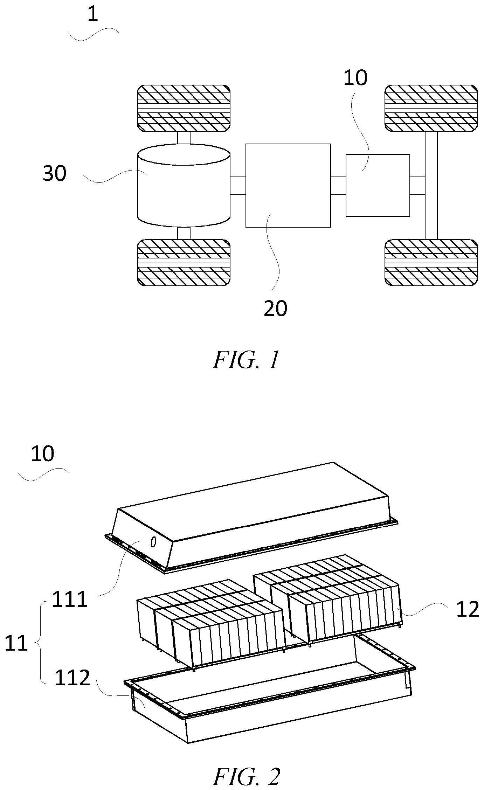

With reference to Figs. 1, 2, 3, and 4, The secondary battery 12 disclosed in the embodiments of the present application may be used in, but not limited to, a power consuming device such as a vehicle 1, a ship or an aircraft. The secondary battery 12, battery 10, etc. disclosed in the present application may be used to compose a power system for the power consuming device. In this way, providing a prelithiation layer for a nonreactive region 12321 of a negative electrode sheet 1232 facilitates improvement in the initial coulombic efficiency, cycling performance, and storage performance of the battery 10.

The embodiments of the present application provide a power consuming device using a battery 10 as a power source. The power consuming device may be, but is not limited to, a cell phone, a tablet, a notebook computer, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

Hereinafter, for the convenience of illustration, a vehicle 1 is taken as an example to describe a power consuming device according to an embodiment of the present application.

With further reference to Fig. 1, the vehicle 1 may be a fuel vehicle, a gas vehicle, or a new energy vehicle. The new energy vehicle may be a battery electric vehicle, a hybrid electric vehicle, an extended-range vehicle, etc. A battery 10 is provided inside the vehicle 1, and the battery 10 may be provided at the bottom, the front or the back of the vehicle 1. The battery 10 may be used to power the vehicle 1. For example, the battery 10 may be used as an operating power source for the vehicle 1. The vehicle 1 may further include a controller 20 and a motor 30. The controller 20 is used to control the battery 10 to power the motor 30, for example, to meet working power requirements during starting, navigation and driving of the vehicle 1.

In some embodiments of the present application, the battery 10 not only may serve as an operating power source for the vehicle 1, but also may serve as a driving power source for the vehicle 1, thus replacing or partially replacing fuel or natural gas to provide driving power for the vehicle 1.

With further reference to Fig. 2, the battery 10 includes an enclosure 11 and a secondary battery 12. The secondary battery 12 is accommodated within the enclosure 11. The enclosure 11 is used to provide an accommodating space for the secondary battery 12, and the enclosure 11 may be of various structures. In some embodiments, the enclosure 11 may include a first portion 111 and a second portion 112. The first portion 111 and the second portion 112 are fitted to each other in a covered manner, and the first portion 111 and the second portion 112 together define an accommodating space for accommodating the secondary battery 12. The second portion 112 may be of a hollow structure with one end open, the first portion 111 may be of a plate-like structure, and the first portion 111 covers an open side of the second portion 112 such that the first portion 111 and the second portion 112 jointly define the accommodating space; and The first portion 111 and the second portion 112 may also each be of a hollow structure with one side open, and an open side of the first portion 111 covers an open side of the second portion 112. Of course, the enclosure 11 formed by the first portion 111 and the second portion 112 may be in various shapes, such as a cylinder and a cuboid.

In the battery 10, a plurality of secondary batteries 12 may be provided. The plurality of secondary batteries 12 may be in series connection or parallel connection or series-parallel connection with one another. The series-parallel connection means that some of the plurality of secondary batteries 12 are in series connection and the rest are in parallel connection. The plurality of secondary batteries 12 may be directly in series connection or parallel connection or series-parallel connection with one another, and then a unit composed of the plurality of secondary batteries 12 is accommodated within the enclosure 11; and of course, the battery 10 may also be in the form that the plurality of secondary batteries 12 are firstly connected in series or in parallel or in series and parallel to form a battery module, and then a plurality of battery modules are connected in series or in parallel or in series and parallel to form a unit and are accommodated within the enclosure 11. The battery 10 may further include other structures. For example, the battery 10 may further include a busbar component for achieving electrical connections between the plurality of secondary batteries 12.

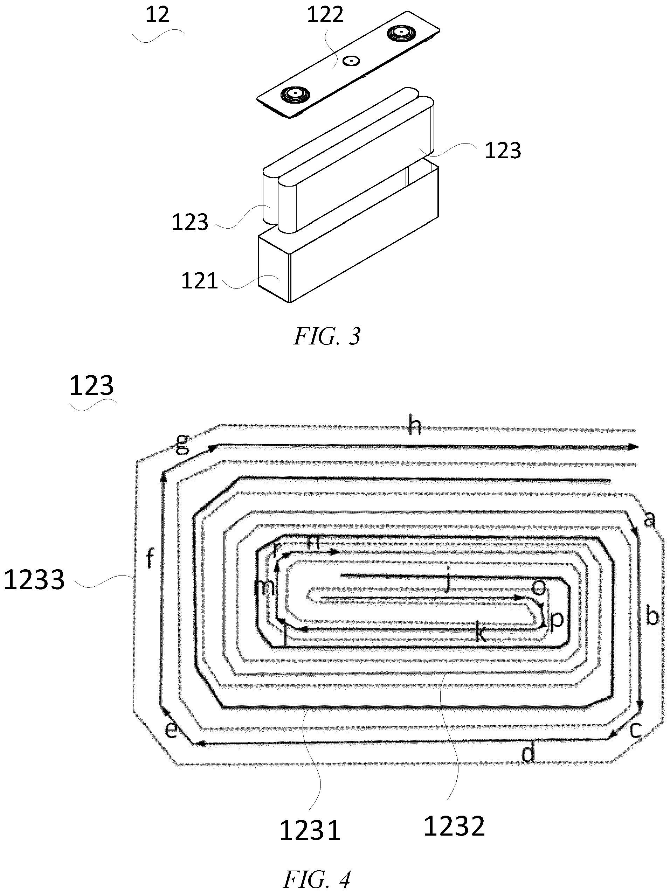

With further reference to Fig. 3, the secondary battery 12 refers to a minimal unit forming the battery 10. As shown in Fig. 3, the secondary battery 12 includes an end cap 122, a housing 121, an electrode assembly 123, and other functional components.

The end cap 122 refers to a component that covers an opening of the housing 121 to isolate an internal environment of the secondary battery 12 from an external environment. Without limitation, the shape of the end cap 122 may be adapted to the shape of the housing 121 to match the housing 121. Specifically, the end cap 122 may be made of a material with certain hardness and strength (such as aluminum alloy), and thus the end cap 122 is less prone to deformation when being squeezed or collided, such that the secondary battery 12 can have a higher structural strength, and safety performance can also be improved. Functional components, such as electrode terminals, may be provided on the end cover 122. The electrode terminals may be used for electrical connection to the electrode assembly 123 for outputting or inputting electrical energy of the secondary battery 12. In some embodiments, a pressure relief mechanism, which is used to release an internal pressure when the internal pressure or temperature of the secondary battery 12 reaches a threshold, may be further provided on the end cap 122. The end cap 122 may also be made of various materials, such as copper, iron, aluminum, stainless steel, an aluminum alloy, plastic, etc., which will not be specially limited in the embodiments of the present application. In some embodiments, an insulating member may also be provided on an inner side of the end cap 122, and the insulating member may be used to isolate electrically connected components in the housing 121 from the end cap 122 to reduce the risk of short circuit. Illustratively, the insulating member may be of plastic, rubber, etc.

The housing 121 is an assembly that is used to fit with the end cap 122 to form an internal environment of the secondary battery 12, wherein the internal environment formed may be used for accommodating the electrode assembly 123, an electrolyte, and other components. The housing 121 and the end cap 122 may be separate components, and the housing 121 may be provided with an opening, at which the end cap 122 is allowed to cover the opening to form the internal environment of the secondary battery 12. Without limitation, the end cap 122 and the housing 121 may also be integrated with each other. Specifically, the end cap 122 and the housing 121 may form a common connection face before other components are inserted into the housing. When the interior of the housing 121 needs to be packaged, the end cap 122 then covers the housing 121. The housing 121 may have various shapes and various sizes, for example, in the form of a cuboid, a cylinder, a hexagonal prism, etc. Specifically, the shape of the housing 121 may be determined depending on the specific shape and size of the electrode assembly 123. The housing 121 may be made of various materials, such as copper, iron, aluminum, stainless steel, an aluminum alloy, plastic, etc., which will not be specially limited in the embodiments of the present application.

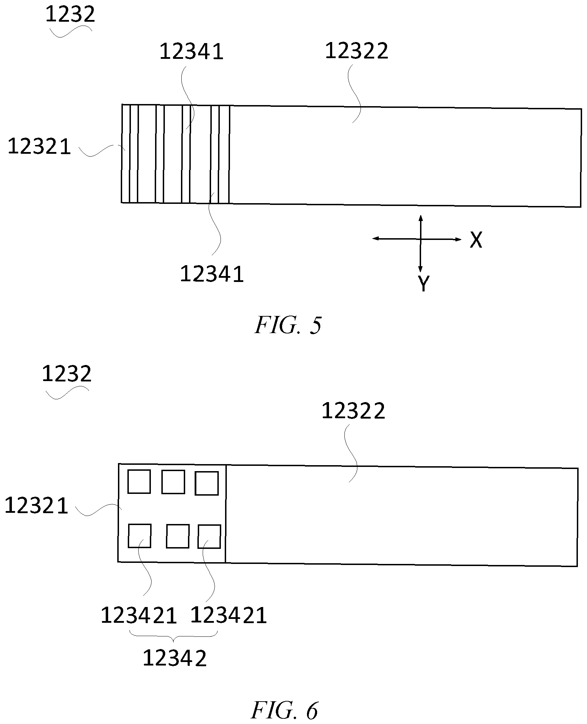

With further reference to Fig. 4 and Fig. 5 as well, the electrode assembly 123 is a component in the secondary battery 12 where an electrochemical reaction takes place. The housing 121 may include one or more electrode assemblies 123 therein. The electrode assembly 123 is mainly formed by winding or stacking a positive electrode sheet 1231 and a negative electrode sheet 1232, and a separator 1233 is generally arranged between the positive electrode sheet 1231 and the negative electrode sheet 1232.

According to some embodiments of the present application, the secondary battery 12 includes an electrode assembly 123, and the electrode assembly 123 includes: at least one positive electrode sheet 1231 and at least one negative electrode sheet 1232, a negative electrode film layer of the at least one negative electrode sheet 1232 having a nonreactive region 12321 thereon, the nonreactive region 12321 being not opposite a positive electrode film layer on the positive electrode sheet 1231 disposed adjacent to the negative electrode sheet 1232 where the nonreactive region is located, and the at least one nonreactive region 12321 being provided with a prelithiation layer 1234 thereon; wherein total capacity of the secondary battery 12 is Q, the total capacity from prelithiation of all the prelithiation layers 1234 is $Q_{Li}$, and $Q_{Li}$ meets the following condition: $0.5\%Q \leq Q_{Li} \leq 10\%Q$.

The electrode assembly 123 further includes a separator 1233, the positive electrode sheet 1231, the separator 1233, and the negative electrode sheet 1232 are stacked in sequence, and the positive electrode sheet 1231 and the negative electrode sheet 1232 may be in alternate arrangement or non-alternate arrangement. The alternate arrangement refers to a stacking manner of a positive electrode sheet 1231, a separator 1233, a negative electrode sheet 1232, a separator 1233, a positive electrode sheet 1231, a separator 1233, a negative electrode sheet 1232, ..., or a stacking manner of a negative electrode sheet 1232, a separator 1233, a positive electrode sheet 1231, a separator 1233, a negative electrode sheet 1232, a separator 1233, a positive electrode sheet 1231, .... The non-alternate arrangement refers to a stacking manner where there are same electrode sheets in adjacency. For example, the non-alternate manner may be a setting manner of a positive electrode sheet 1231, a positive electrode sheet 1231, a separator 1233, a negative electrode sheet 1232, a separator 1233, a positive electrode sheet 1231, a positive electrode sheet 1231, a separator 1233, a negative electrode sheet 1232, .... Selection may be made to set a separator 1233 or not set a separator 1233 between two negative electrode sheets 1232 arranged in adjacency and between two positive electrode sheets 1232 that are adjacent. Specifically, a polyethylene film with a thickness of 12 $\mu$m is selected as a separator 1233.

The positive electrode sheet 1231 includes a positive electrode current collector and positive electrode film layers arranged on two opposite sides of the positive electrode current collector along a thickness direction of the positive electrode current collector. A preparation process of the positive electrode sheet is specifically as follows. Lithium iron phosphate, acetylene black as the conductive agent, and polyvinylidene fluoride (PVDF) as the binder are mixed according to a mass ratio of 96 : 2 : 2, N-methylpyrrolidone (NMP) is added as a solvent, the system is stirred under the action of a vacuum stirrer until the system is homogeneous, to obtain a positive electrode slurry. Then, two surfaces of the positive electrode current collector 12 $\mu$m in thickness are coated with the positive electrode slurry, subjected to a high temperature condition of drying at 115°C for 15 min, and cold-pressed to give a positive electrode film layer 84 $\mu$m in thickness, a positive electrode sheet 1231 that is 605 mm in length and 88 mm in film width is obtained by slitting, coating weight is 20 mg/cm2, and compacted density is 2.4 g/cm$^3$.

The negative electrode sheet 1232 includes a negative electrode current collector and negative electrode film layers arranged on two opposite sides of the negative electrode current collector along a thickness direction of the negative electrode current collector. A preparation process of the negative electrode sheet 1232 is specifically as follows. Synthetic graphite, acetylene black as the conductive agent, sodium carboxymethyl cellulose (CMC) as the thickener, and SBR as the binder are mixed according to a mass ratio of 96.4 : 1 : 1.2 : 1.4, deionized water is added as a solvent, and the system is stirred under the action of a vacuum stirrer until the system is homogeneous, to obtain a negative electrode slurry; two surfaces of the negative electrode current collector 8 $\mu$m in thickness are coated with the negative electrode slurry, subjected to drying at 115°C for 15 min, and cold-pressed to give a negative electrode film layer that is 61 $\mu$m in single side thickness, a negative electrode sheet 1232 that is 735 mm in length and 93 mm in film width is obtained by slitting, and the negative electrode sheet 1232 has a coating weight of 9.4 mg/cm$^2$, and a compacted density of 1.55 g/cm$^3$.

Each negative electrode sheet 1232, on one side or opposite sides, has a positive electrode sheet 1231 disposed adjacent to the negative electrode sheet, and the negative electrode sheet 1232 and the positive electrode sheet 1231 being in adjacent arrangement means that the negative electrode sheet 1232 and the positive electrode sheet 1231 are stacked on two opposite sides of a same separator 1233. Each negative electrode sheet 1232 has a reactive region 12322 on at least one negative electrode film layer, and at least one negative electrode sheet 1232 has a nonreactive region 12321 on the negative electrode film layer. Only the reactive region 12322 is disposed on each negative electrode film layer on the negative electrode sheet 1232 having adjacently disposed positive electrode sheets 1231 on two opposite sites, the reactive region 12322 is disposed on the negative electrode film layer, facing the positive electrode sheet 1231, on the negative electrode sheet 1232 having adjacently disposed positive electrode sheets 1231 on a single side, and in the same negative electrode sheet 1232, the negative electrode film layer and/or the negative electrode film layer disposed opposite the negative electrode film layer is provided with a nonreactive region 12321 thereon. That is, in the negative electrode sheet 1232 having on a single side the positive electrode sheet 1231 adjacent to the same, the negative electrode film layer, facing the positive electrode sheet 1231 adjacent to the negative electrode sheet 1232, of the negative electrode sheet may be only provided with the reactive region 12322 thereon, and may also be provided with both the reactive region 12322 and the nonreactive region 12321, and the negative electrode film layer, facing away the positive electrode sheet 1231 adjacent to the negative electrode sheet 1232, of the negative electrode sheet can be only provided with the nonreactive region 12321. In the negative electrode sheet 1232 having on two opposite sides the positive electrode sheets 1231 adjacent to the same, each negative electrode film layer of the negative electrode sheet 1232 can be only provided with the reactive region 12322 thereon. It can thus be seen that the nonreactive region 12321 is located only on the negative electrode sheet 1232 having on one side the positive electrode sheet 1231 adjacent to the same. In the same negative electrode sheet 1232, the reactive region 12322 and the nonreactive region 12321 may be positioned on the same negative electrode film layer or positioned on different negative electrode film layers, and the reactive region 12322 and the nonreactive region 12321 are positioned at surfaces, facing away from the negative electrode current collector, of the negative electrode film layers where they are located.

In the negative electrode sheet 1232 having both the reactive region 12322 and the nonreactive region 12321, the reactive region 12322 is disposed opposite a positive electrode film layer on the positive electrode sheet 1231 disposed adjacent to the negative electrode sheet 1232 where the reactive region is located, and the nonreactive region 12321 is disposed not opposite the positive electrode film layer on the positive electrode sheet 1231 disposed adjacent to the negative electrode sheet 1232 where the nonreactive region is located. During charging and discharging, lithium deintercalation occurs directly between the reactive region 12322 and the positive electrode film layer disposed opposite the positive electrode sheet 1231, and lithium deintercalation does not occur directly between the nonreactive region 12321 and the positive electrode film layer of the positive electrode sheet 1231.

The reactive region 12322 being disposed opposite the positive electrode film layer on the positive electrode sheet 1231 disposed adjacent to the negative electrode sheet 1232 where the reactive region is located means that: with the separator 1233 between the reactive region 12322 and the positive electrode film layer neglected, the reactive region 12322 and the positive electrode sheet 1231 are disposed facing each other, while the reactive region 12322 overlaps exactly with a projection of the positive electrode film layer in a stacking direction of the positive electrode sheet 1231 and the negative electrode sheet 1232. The nonreactive region 12321 being disposed not opposite the positive electrode film layer on the positive electrode sheet 1231 disposed adjacent to the negative electrode sheet 1232 where the nonreactive region is located means that: the nonreactive region 12321 and the positive electrode film layer of the positive electrode sheet 1231 are disposed facing each other, while the nonreactive region 12321 does not overlap exactly with a projection of the positive electrode film layer in the stacking direction of the positive electrode sheet 1231 and the negative electrode sheet 1232, and/or the nonreactive region 12321 is disposed facing away from the positive electrode film layer of the positive electrode sheet 1231, and there is no specific limitation on whether the nonreactive region 12321 overlaps with the projection of the positive electrode film layer in the stacking direction of the positive electrode sheet 1231 and the negative electrode sheet 1232. Specifically, when both the reactive region 12322 and the nonreactive region 12321 are positioned at the negative electrode film layer of the negative electrode sheet 1232, which faces the positive electrode film layer of the positive electrode sheet 1231, the nonreactive region 12321 does not overlap exactly with the projection of the positive electrode film layer in the stacking direction of the positive electrode sheet 1231 and the negative electrode sheet 1232; and When both the reactive region 12322 and the nonreactive region 12321 are positioned at different negative electrode film layers in the negative electrode sheet 1232, the reactive region 12322 and the positive electrode sheet 1231 are disposed facing each other, while the reactive region 12322 overlaps exactly with the projection of the positive electrode film layer in the stacking direction of the positive electrode sheet 1231 and the negative electrode sheet 1232, and the nonreactive region 12321 is disposed facing away from the positive electrode film layer of the positive electrode sheet 1231.

As an example with the electrode assembly 123 in stack structure, among all the positive electrode sheets 1231 and all the negative electrode sheets 1232, a surface of the negative electrode film layer, facing away from the positive electrode film layer on the positive electrode sheet 1231 disposed adjacent to the outermost negative electrode sheet, in the outermost negative electrode sheet 1232 forms a nonreactive region 12321.

For example, the electrode assembly 123 includes two positive electrode sheets 1231, two negative electrode sheets 1232, and three separators 1233. In a stacking direction, the electrode assembly 123 is arranged in a manner of a positive electrode sheet 1231, a separator 1233, a negative electrode sheet 1232, a separator 1233, a positive electrode sheet 1231, a separator 1233, and a negative electrode sheet 1232. In the stacking direction, the first negative electrode sheet 1232 is positioned between the two negative electrode sheets 1231, so the first negative electrode sheet 1232 has no nonreactive region 12321 present. among all the positive electrode sheets 1231 and all the negative electrode sheets 1232, the second negative electrode sheet 1232 is the negative electrode sheet 1232 positioned outermost, a surface of the negative electrode film layer, facing away from the positive electrode film layer of the second positive electrode sheet 1231 adjacent to the second negative electrode sheet, of the second negative electrode sheet 1232 forms a nonreactive region 12321.

With further reference to Fig. 4, as an example with the electrode assembly 123 in winding structure, the electrode assembly 123 includes a starting winding segment, an ending winding segment, and an intermediate winding segment connected between the starting winding segment and the ending winding segment. Of all positive electrode sheets 1231 and all negative electrode sheets 1232 of the starting winding segment, a surface of an innermost negative electrode film layer in the innermost negative electrode sheet 1232 (as shown in Fig. 4, the negative electrode sheet 1232 formed by including a combination of segments located at arrow j, arrow O, arrow p, arrow K, arrow l, arrow m, arrow r, and arrow n) may form a nonreactive region 12321, and/or of all positive electrode sheets 1231 and all negative electrode sheets 1232 of the ending winding segment, a surface of an outermost negative electrode film layer in the outermost negative electrode sheet 1232 (as shown in Fig. 4, the negative electrode sheet 1232 formed by including a combination of segments located at arrow a, arrow b, arrow c, arrow d, arrow e, arrow f, arrow g, and arrow h) may also form a nonreactive region.

That is, when there is an innermost negative electrode sheet 1232 in the starting winding segment, the surface of the innermost negative electrode film layer in this negative electrode sheet 1232 forms a nonreactive region 12321, and when there is an outermost negative electrode sheet 1232 in the ending winding segment, the surface of the outermost negative electrode film layer in this negative electrode sheet 1232 forms a nonreactive region 12321. Other negative electrode sheets 1232 in the starting winding segment, other negative electrode sheets 1232 in the ending winding segment, and all negative electrode sheets 1232 in the intermediate winding segment have on each side positive electrode sheets 1231 adjacent to them, and the surface of each negative electrode film layer of each negative electrode sheet 1232 in this segment can only form a reactive region 12322.

The innermost negative electrode sheet 1232 of the starting winding segment refers to: one negative electrode sheet 1232 closest to a winding center line, among all positive electrode sheets 1231 and all negative electrode sheets 1232 of the starting winding segment; The innermost negative electrode film layer in the innermost negative electrode sheet 1232 in the starting winding segment refers to: one negative electrode film layer, closest to the winding center line, of the innermost negative electrode sheet 1232 in the starting winding segment.

the outermost negative electrode sheet 1232 of the ending winding segment refers to: one negative electrode sheet 1232 most away from the winding center line, among all positive electrode sheets 1231 and all negative electrode sheets 1232 of the ending winding segment. The outermost negative electrode film layer in the outermost negative electrode sheet 1232 in the ending winding segment refers to: one negative electrode film layer, most away from the winding center line, of the outermost negative electrode sheet 1232 of the ending winding segment.

The electrode assembly 123 is defined as N turns, where N > 5, and N is a natural number. The starting winding segment (one segment, as shown in Fig. 4, using the negative electrode sheet 1232 formed by including a combination of segments located at arrow j, arrow O, arrow p, arrow K, arrow 1, arrow m, arrow r, and arrow n, as the innermost negative electrode sheet 1232) is composed of a turn 1, or is composed of the turn 1 and part of a turn 2 disposed in succession, or may also be composed of the turn 1 and the turn 2, and the ending winding segment (one segment, as shown in Fig. 4, using the negative electrode sheet 1232 formed by including a combination of segments located at arrow a, arrow b, arrow c, arrow d, arrow e, arrow f, arrow g, and arrow h, as the outermost negative electrode sheet 1232) is composed of a last turn or the last turn and part of a second last turn disposed in succession, or may also be composed of the last turn and the second last turn. An intermediate turn is an assembly of all turn layers connected between the starting winding segment and the ending winding segment.

Negative electrode sheet 1232 in at least one of the starting winding segment and the ending winding segment has a nonreactive region 12321, and at least one nonreactive region 12321 in the starting winding segment and the ending winding segment is provided with a prelithiation layer 1234.

In an embodiment where the electrode assembly 123 is of stack structure, the nonreactive region 12321 may be part or all of a region, on the negative electrode sheet 1232, of the surface of the negative electrode film layer on one side having no positive electrode sheet 1231 adjacent to the negative electrode sheet. In an embodiment where the electrode assembly 123 is of winding structure, the nonreactive region 12321 is part of a region, on the negative electrode sheet 1232, of the surface of the negative electrode film layer on one side having no positive electrode sheet 1231 adjacent to the negative electrode sheet.

The prelithiation layer 1234 refers to a material that can supplement lithium ions to an interior of the positive electrode sheet 1231, for example, the prelithiation layer 1234 may be, but not limited to, a material of prelithiation layer that can provide active lithium, including but not limited to the follow several: e.g., lithium foil, lithium powder, silicon-lithium alloy, aluminum-lithium alloy, magnesium-lithium alloy, tin-lithium alloy, etc. Additionally, the prelithiation layer 1234 may be subjected to a calendering, depositing or bonding manner, where the depositing manner may be, but not limited to, magnetron sputtering deposition manner etc.

In the present application, a lithium source is placed on a surface of a negative electrode film layer of a nonreactive region 12321 and forms a prelithiation layer 1234 before priming. There is a potential difference of about 3 V between lithium on the prelithiation layer 1234 and a forming material of the negative electrode film layer overlapping the prelithiation layer, such as graphite or silicon-carbon material, and a voltage of the lithium is below that of the forming material of the negative electrode film layer with no lithium intercalated that bears the lithium. Since the prelithiation layer 1234 is in tight attachment to the nonreactive region of the negative electrode film layer bearing the prelithiation layer after priming of the secondary battery 12, an electric circuit forms between the prelithiation layer 1234 and the negative electrode film layer bearing the same, which equals a state of direct short circuit (in which the prelithiation layer 1234 is a negative electrode, and the negative electrode film layer bearing the prelithiation layer 1234 is a positive electrode). Under the action of the potential difference between them, the lithium in the prelithiation layer 1234 can lose electrons and become freely moving lithium ions intercalated in the negative electrode film layer bearing the prelithiation layer, and can form $LiC_x$ ($x \geq 6$) with C (carbon) in the negative electrode film layer and/or form $Li_xSi_y$ ($x > 0$, $y > 0$) with Si (silicon) in the negative electrode film layer bearing the prelithiation layer. In this case, the original prelithiation layer, $LiC_x$ and/or $Li_xSi_y$ combine to form a new stable prelithiation layer.

The new stable prelithiation layer has a low potential. Since the lithium ions are intercalated from a low potential region to a high potential region, the new stable prelithiation layer 1234 can thus effectively block the lithium ions of a reactive region 12322 on the same negative electrode sheet 1232 from dispersing and intercalating to the nonreactive region 12321 during charging, while the potential of the reactive region 12322 of the negative electrode sheet 1232 rises gradually during discharging. At this point, the potential of the reactive region 12322 is far higher than that of the nonreactive region 12321. The lithium ions in the new stable prelithiation layer 1234 can be driven by this potential difference to disperse to the reactive region 12322 at a low speed, thus improving the initial coulombic efficiency, cycling performance, and storage performance of the secondary battery 12.

According to some embodiments of the present application, the prelithiation layer 1234 is a layer of elemental lithium metal.

For example, lithium metal element may be lithium foil, lithium powder etc. The processing performance of the lithium foil is better than that of the lithium powder, so the lithium foil is preferred as the prelithiation layer 1234.

As an example with the prelithiation layer 1234 as the lithium foil, a manufacturing process of the lithium foil is as follows.

In a first step, total capacity Q of secondary batteries 12 is designed, and Q is in ampere-hours (Ah), wherein the total capacity Q is calculated in the follow manner: total capacity Q = (E*1000)/n/V, E is energy of battery 10 in a power consuming device and is in kilowatt-hours (KW·h), n is total quantity (just by counting) of secondary batteries 12 in the battery 10 in the power consuming device, and V is voltage of single secondary battery 12 and is in volts (v);

in a second step, total capacity $Q_{Li}$ for desired prelithiation is calculated based on the total capacity of the secondary batteries 12;

in a third step, the secondary battery 12 is tested in a button manner to measure a capacity per unit area $C_{negative}$ in a film layer on the single side of each negative electrode sheet 1232, and the capacity is in ampere-hours/square meter (Ah/cm$^2$);

in a fourth step, total area for prelithiation of a lithium foil is calculated as $S_{Li} = Q_{Li}/X\%C_{negative}$ ($20\% \leq X \leq 120\%$);

in a fifth step, total weight for desired prelithiation is calculated as $W_{Li} = Q_{Li}/3860$ Ah/g (gram capacity of lithium);

in a sixth step, average thickness of the lithium foil is calculated as $H_{Li} = W_{Li}/$lithium's density$/S_{Li}$;

in a seventh step, the lithium foil is calendered to the thickness calculated in the sixth step using a roller press, producing a lithium foil compliant with theoretical design; and

in an eighth step, the lithium foil produced in the seventh step is cut into a lithium foil with desired length and width according to the total area for prelithiation of lithium foil $S_{Li}$, and is placed at a nonreactive region 12321 of a negative electrode sheet 1232.

The prelithiation layer 1234 made of lithium alloys such as silicon-lithium alloy, aluminum-lithium alloy, magnesium-lithium alloy, and tin-lithium alloy has a relatively lower gram capacity of the lithium alloys, may produce metal impurities after deintercalation of lithium, and has a risk of worsening safety of the secondary battery 12. Lithium metal element in the layer of elemental lithium metal has a high theoretical gram capacity with little residue occurring after reaction. This can improve first efficiency, cycling and storage performances of the secondary battery 12 without reducing energy density of the secondary battery 12.

According to some embodiments of the present application, $2\%Q \leq Q_{Li} \leq 6\%Q$.

It is found via experimenting that when utilization rate of a prelithiation layer 1234 decreases gradually with an increase in prelithiation amount, after the prelithiation amount exceeds 10% of the total capacity of a secondary battery 12, a reduction in the utilization rate increases in magnitude, while lithium metal has aggravated side effects. If the prelithiation amount of the prelithiation layer 1234 is too low, it is impossible to effectively carry out prelithiation.

With the foregoing in mind, it is preferable to control the prelithiation amount of the prelithiation layer 1234 within: a range of $2\%Q \leq Q_{Li} \leq 6\%Q$. Within the range of $2\%Q \leq Q_{Li} \leq 6\%Q$, the initial coulombic efficiency, cycling performance, and storage performance of the secondary battery 12 can be improved, and further, the prelithiation layer 1234 has a high utilization rate.

According to some embodiments of the present application, the electrode assembly 123 includes separator 1233, and the electrode assembly 123 is configured as a stack structure formed by stacking positive electrode sheets 1231, the separator 1233 and negative electrode sheets 1232; among all the positive electrode sheets 1231 and all the negative electrode sheets 1232, a surface of an outermost negative electrode film layer in the outermost negative electrode sheet 1232 forms nonreactive region 12321, and the prelithiation layer 1234 covers the nonreactive region 12321.

The prelithiation layer 1234 may completely cover the nonreactive region 12321 or partially cover the nonreactive region 12321, with specific settings depending on prelithiation needs.

In this embodiment, among all the positive electrode sheets 1231 and all the negative electrode sheets 1232, the negative electrode film layer of the intermediate negative electrode sheet 1232 has no nonreactive region 12321, and the surface of the outermost negative electrode film layer of the outermost negative electrode sheet 1232 has a reactive region 12321. The outermost negative electrode film layer in the outermost negative electrode sheet 1232 refers to a negative electrode film layer of the outermost negative electrode sheet 1232, which is disposed facing away from the positive electrode sheet 1231 adjacent to the outermost negative electrode sheet.

among all the positive electrode sheets 1231 and all the negative electrode sheets 1232, the outermost negative electrode sheet 1232 refers to the negative electrode sheet 1232 disposed at a first stacking position along a stacking direction and the negative electrode sheet 1232 at the last stacking position. The stacking position refers to a position in the electrode assembly 123 where each electrode sheet is located. As an example where the electrode assembly 123 includes one positive electrode sheet 1231, one separator 1233 and one negative electrode sheet 1232 and in the stacking direction, the positive electrode sheet 1231, the separator 1233 and the negative electrode sheet 1232 are arranged in succession, the positive electrode sheet 1231 is at the first stacking position, while the negative electrode sheet 1232 is at the last stacking position. The intermediate negative electrode sheet 1232 refers to negative electrode sheet 1232 positioned at a stacking position between the first stacking position and the last stacking position.

In the electrode assembly 123 with the stack structure, there is an outermost negative electrode sheet 1232 positioned at the first stacking position and/or the last stacking position. For example, as an example where the electrode assembly 123 is arranged by stacking a positive electrode sheet 1231 (positioned at the first stacking position), a separator 1233, a negative electrode sheet 1232 (positioned at a second stacking position), a separator 1233, a positive electrode sheet 1231 (positioned at a third stacking position), a separator 1233 and a negative electrode sheet 1232 (positioned at the last stacking position) along the stacking direction, in this embodiment, the negative electrode sheet 1232 positioned at the second stacking position is an intermediate negative electrode sheet 1232, the negative electrode sheet 1232 positioned at the last stacking position is an outermost negative electrode sheet 1232, and a negative electrode film layer, facing away from the third stacking position, of the negative electrode sheet 1232 positioned at the last stacking position is an outermost negative electrode film layer in the outermost negative electrode sheet 1232. For another instance, as an example where the electrode assembly 123 is arranged by stacking a separator 1233, a negative electrode sheet 1232 (positioned at the first stacking position), a separator 1233, a positive electrode sheet 1231 (positioned at the second stacking position), a separator 1233, a negative electrode sheet 1232 (positioned at the last stacking position), and a separator 1233 along the stacking direction, in this embodiment, both negative electrode sheets 1232 positioned at the first stacking position and the last stacking position are outermost negative electrode sheets 1232. Both the negative electrode film layer, facing away from the positive electrode sheet 1231 positioned at the second stacking position, of the negative electrode sheet 1232 positioned at the first stacking position as well as the negative electrode film layer, facing away from the positive electrode sheet 1231 positioned at the second stacking position, of the negative electrode sheet 1232 positioned at the last stacking position are outermost negative electrode film layers in the outermost negative electrode sheet 1232.

With the outermost negative electrode film layer in the outermost negative electrode sheet 1232 provided with a prelithiation layer 1234 and the prelithiation layer 1234 covering a nonreactive region 12321, prelithiation area of the prelithiation layer 1234 can be effectively expanded, thereby enabling higher initial coulombic efficiency, cycling performance, and storage performance for the electrode assembly 123 with the stack structure.

With further reference to Figs. 4 and 5, according to some embodiments of the present application, the electrode assembly 123 includes a separator 1233, and the electrode assembly 123 is configured as a winding structure formed by winding positive electrode sheets 1231, the separator 1233 and negative electrode sheets 1232; the electrode assembly 123 includes a starting winding segment and an ending winding segment, among all the positive electrode sheets 1231 and all the negative electrode sheets 1232 of the starting winding segment, a surface of an innermost negative electrode film layer in the innermost negative electrode sheet 1232, and/or, among all the positive electrode sheets 1231 and all the negative electrode sheets 1232 of the ending winding segment, a surface of an outermost negative electrode film layer in the outermost negative electrode sheet 1232, forms a nonreactive region 12321, and the nonreactive region 12321 on at least one of the starting winding segment and the ending winding segment is provided with a prelithiation layer 1234.

In this embodiment, both the surface of the innermost negative electrode film layer in the innermost negative electrode sheet 1232 at the starting winding segment and the surface of the outermost negative electrode film layer in the outermost negative electrode sheet 1232 at the ending winding segment have nonreactive region 12321, and each of other negative electrode sheets 1232 only has the reactive region 12322 thereon.

As an example where the electrode assembly 123 includes one positive electrode sheet 1231, one separator 1233, and one negative electrode sheet 1232 and the three are stacked in sequence along a stacking direction and are then wound to form the electrode assembly 123 in winding structure, the positive electrode sheet 1231 is closer to a winding center line than the negative electrode sheet 1232. In this embodiment, both the starting winding segment and the ending winding segment have the positive electrode sheet 1231, the separator 1233, and the negative electrode sheet 1232 therein, each of the starting winding segment, the intermediate winding segment and the ending winding segment has the positive electrode sheet 1231, the separator 1233, and the negative electrode sheet 1232 therein, and the positive electrode sheet 1231 in each segment is closer to the winding center line than the negative electrode sheet 1232. In this embodiment, only the outermost negative electrode sheet 1232 of the ending winding segment has a nonreactive region.

As an example where the electrode assembly 123 includes two negative electrode sheets 1232, two separators 1233, and one positive electrode sheet 1231 and they are stacked along the stacking direction in a manner of a negative electrode sheet 1232, a separator 1233, a positive electrode sheet 1231, a separator 1233, and a negative electrode sheet 1232 along the stacking direction and are then wound to form the electrode assembly 123 in winding structure, and the negative electrode sheet 1232 is closer to the winding center line than the positive electrode sheet 1231. In this embodiment, both the starting winding segment and the ending winding segment have two negative electrode sheets 1232, two separators 1233, and one positive electrode sheet 1231 therein, and the negative electrode sheet 1232 in each segment is arranged closer to the winding center line than the positive electrode sheet 1231. In this embodiment, the first negative electrode sheet 1232 arranged along the stacking direction, when expanded, is positioned at one segment in the starting winding segment, forming the innermost negative electrode sheet 1232 among all positive electrode sheets 1231 and all negative electrode sheets 1232 of the starting winding segment, and the second negative electrode sheet 1232 arranged along the stacking direction, when expanded, is positioned at one segment of the ending winding segment, forming the outermost negative electrode sheet 1232 in all positive electrode sheets 1231 and all negative electrode sheets 1232 of the ending winding segment.

With further reference to Fig. 4, in Fig. 4, as an example where the electrode assembly 123 only includes one negative electrode sheet 1232, one positive electrode sheet 1231, and one separator 1233 and they are stacked in a stacking manner of the negative electrode sheet 1232, the separator 1233, and the positive electrode sheet 1231 along the stacking direction and are then wound to form the electrode assembly 123 in winding structure, the negative electrode sheet 1232 is closer to the winding center line than the positive electrode sheet 1231, and portions of the negative electrode sheet 1232 and the separator 1233 extending beyond the positive electrode sheet 1231 are wound to form an ending winding segment of the electrode assembly 123. That is, both the starting winding segment and the intermediate winding segment of the electrode assembly 123 include the negative electrode sheet 1232, the separator 1233 and the positive electrode sheet 1231 therein, but the ending winding segment only includes the negative electrode sheet 1232 and the separator 1233. In this embodiment, the innermost negative electrode film layer of the negative electrode sheet 1232 (as shown in Fig. 4, the negative electrode sheet 1232 formed by including a combination of segments located at arrow j, arrow O, arrow p, arrow K, arrow l, arrow m, arrow r, and arrow n) of the starting winding segment and the outermost negative electrode film layer of the negative electrode sheet 1232 (as shown in Fig. 4, the negative electrode sheet 1232 formed by including a combination of segments located at arrow a, arrow b, arrow c, arrow d, arrow e, arrow f, arrow g, and arrow h) of the ending winding segment both have the nonreactive region 12321. In this embodiment, when the negative electrode sheet 1232 is expanded, the nonreactive region 12321 in the starting winding segment and the nonreactive region 12321 of the ending winding segment are distributed at two opposite ends of the negative electrode sheet 1232 along a lengthwise direction X of the negative electrode sheet 1232, and are positioned on the negative electrode film layers on the two opposite sides of the negative electrode sheet 1232, respectively. Both the nonreactive region 12321 in the starting winding segment and the nonreactive region 12321 of the ending winding segment are provided with the prelithiation layer 1234.

With an example where the electrode assembly 123 is of winding structure and the electrode assembly 123 accords with a setting manner in Fig. 4, the following embodiments are explained.

Specifically, both the nonreactive region 12321 of the surface of the innermost negative electrode film layer in the innermost negative electrode sheet 1232 in the starting winding segment and the nonreactive region 12321 of the surface of the outermost negative electrode film layer in the outermost negative electrode sheet 1232 in the ending winding segment are provided with a prelithiation layer 1234.

In this embodiment, it is possible that the nonreactive region 12321 on the innermost negative electrode sheet 1232 among all positive electrode sheets 1231 and all negative electrode sheets 1232 of the starting winding segment is provided with the prelithiation layer 1234, and/or that the nonreactive region 12321 on the outermost negative plate 1232 among all positive electrode sheets 1231 and all negative electrode sheets 1232 of the ending winding segment is provided with the prelithiation layer 1234, in this way, the initial coulombic efficiency, cycling performance, and storage performance of the electrode assembly 123 may be effectively improved.

In this embodiment, both the starting winding segment and the ending winding segment of the electrode assembly 123 are possibly provided with nonreactive region 12321. The more nonreactive region 12321 sites, the more conducive to distribution of the prelithiation layer 1234, so that it may be possible to select positions for setting the prelithiation layer 1234 as desired.

According to some embodiments of the present application, each nonreactive region 12321 in the starting winding segment and the ending winding segment is provided with a prelithiation layer 1234, total capacity from prelithiation of all the prelithiation layers 1234 arranged on the starting winding segment is $Q_1$, total capacity from prelithiation of all the prelithiation layers 1234 arranged on the ending winding segment is $Q_2$, where $Q_{Li} = Q_1 + Q_2$, and $Q_1 > Q_2$.

Since the starting winding segment is positioned at the center of the electrode assembly 123 in contrast to the ending winding segment, the starting winding segment has a far higher electrolyte-retaining capacity than the ending winding segment after being fully impregnated by an electrolyte. In this way, it more facilitates dispersion of lithium ions in the prelithiation layer 1234 to further improve the initial coulombic efficiency, cycling performance, and storage performance of a battery cell.

According to some embodiments of the present application, total area of prelithiation of all the prelithiation layers 1234 is $S_{Li}$, capacity per unit area in the negative electrode film layer on the single side of each negative electrode sheet 1232 is $C_{negative}$, and $S_{Li}$ meets the following condition: $Q_{Li}/120\% C_{negative} \leq S_{Li} \leq Q_{Li}/20\% C_{negative}$.

Potential level of the nonreactive region 12321 of the negative electrode sheet 1232 is directly related to prelithiation area of the nonreactive region 12321. The larger the prelithiation area is, the higher extent a reduction in the potential of the nonreactive region 12321 on the negative electrode sheet 1232 is at, and then the potential of the whole negative electrode sheet 1232 will also be reduced. In this way, there will be a greater potential difference between the negative electrode sheet 1232 and the positive electrode sheet 1231 disposed adjacent to the negative electrode sheet 1232. According to the equation, energy = potential difference * capacity, the greater the potential difference, the higher the energy of a secondary battery 12. Therefore, the secondary battery 12 with this design has a high energy density.

According to some embodiments of the present application, $S_{Li}$ meets the following condition: $Q_{Li}/90\% C_{negative} \leq S_{Li} \leq Q_{Li}/50\% C_{negative}$.

Within this range, prelithiation area in the secondary battery 12 is appropriate, utilization rate is high, and the initial coulombic efficiency, cycling performance, and storage performance of the secondary battery 12 may be effectively improved.

With reference to Figs. 5 and 6, according to some embodiments of the present application, the prelithiation layer 1234 includes: a plurality of first prelithiation units 12341 arranged in a spaced manner along a lengthwise direction X of a negative electrode sheet 1232 where they are located; and/or a plurality of second prelithiation units 12342 arranged in a spaced manner along a transverse direction Y of the negative electrode sheet 1232 where they are located.

As an example where the electrode assembly 123 is of stack structure, the lengthwise direction X of the negative electrode sheet 1232 is its length direction, and the transverse direction Y of the negative electrode sheet 1232 is its width direction. As an example where the electrode assembly 123 is of winding structure, the lengthwise direction X of the negative electrode sheet 1232 is a length direction when it is expanded, the transverse direction Y of the negative electrode sheet 1232 refers to a width direction when it is expanded, and the negative electrode sheet 1232 is wound along its lengthwise direction X during winding.

The prelithiation layer 1234 may only include the plurality of first prelithiation units 12341, or may only include the plurality of second prelithiation units 12342, or may include both the plurality of first prelithiation units 12341 and the plurality of second prelithiation units 12342. The first prelithiation units 12341 and the second prelithiation units 12342 may be arranged in intersecting manner or spaced manner.

In this embodiment, there is a gap between any adjacent two of the first prelithiation units 12341 and/or between any adjacent two of the second prelithiation units 12342. The arrangement of the gap enables an electrolyte to fully impregnate the nonreactive region 12321. In this way, the prelithiation layer 1234 may be intercalated quickly to a negative electrode film layer overlapping the same and form a new stable prelithiation layer 1234. The new stable prelithiation layer 1234 may supplement lithium ions slowly, thereby facilitating prolonging service life of the secondary battery 12.

According to some embodiments of the present application, each first prelithiation unit 12341 extends, along the transverse direction Y of the negative electrode sheet 1232 where it is located, to two opposing edges of the negative electrode sheet 1232.

The first prelithiation unit 12341 may be in the shape of a bar, a rod, a rectangle etc.

With this design, space of the nonreactive region 12321 can be fully utilized to arrange the first prelithiation units 12341, such that the first prelithiation units 12341 have a large length, and accordingly, prelithiation capacity of the first prelithiation units 12341 also increases, such that the secondary battery 12 has a good prelithiation effect. In addition, a gap formed between every two adjacent first prelithiation units 12341 may further ensure that an electrolyte can provide full impregnation.

According to some embodiments of the present application, each second prelithiation unit 12342 includes a plurality of prelithiation portions 123421, each prelithiation portion 123421 is in patch shape, all the prelithiation portions 123421 of each second prelithiation unit 12342 are arranged in a spaced manner along the lengthwise direction X of the negative electrode sheet 1232 where it is located.

The second prelithiation unit 12342 may be in the shape of a square patch, a circular patch, a triangular patch etc., and the specific structure is not limited here.

In these embodiments, full impregnation of an electrolyte can be further ensured.

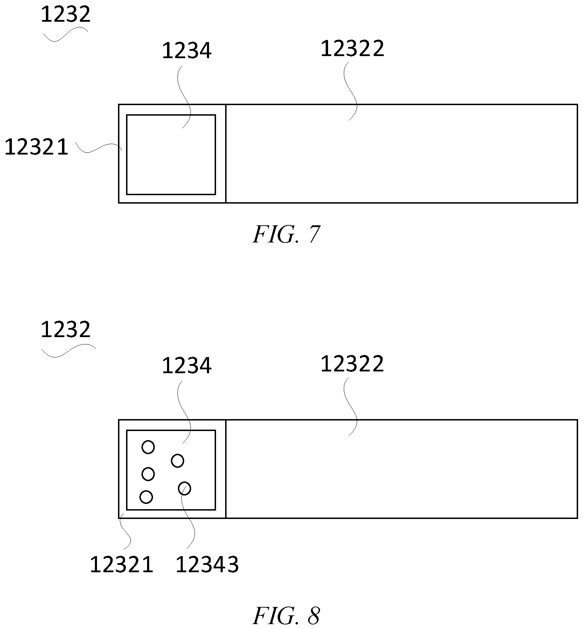

With reference to Fig. 7, according to some embodiments of the present application, the prelithiation layer 1234 is configured as a layer structure continuously extending along the lengthwise direction X of the negative electrode sheet 1232 where it is located.

That is, the prelithiation layer 1234 is of dense and continuous layer structure.

In this way, the negative electrode sheet 1232 has large prelithiation area thereon, and then there will be a greater potential difference between the negative electrode sheet 1232 and the positive electrode sheet 1231 disposed adjacent to the negative electrode sheet 1232. According to the equation, energy = potential difference * capacity, the greater the potential difference, the higher the energy of a secondary battery 12; and accordingly, the cycling performance and storage performance of the secondary battery 12 may be improved.

With reference to Fig. 8, according to some embodiments of the present application, the prelithiation layer 1234 is provided with a plurality of through-holes 12343 therein.

Specifically, the through-holes 12343 may be arranged in a matrix manner or irregular manner, and the specific manner may be set as desired.

As an example with the prelithiation layer 1234 as a lithium foil, a manufacturing process of the lithium foil provided with a plurality of through-holes 12343 is as follows.

In a first step, the lithium foil produced is cut into a lithium foil with desired length and width according to the total area for prelithiation of lithium foil $S_{Li}$;

in a second step, front and back faces of the lithium foil arranged along its thickness direction are fully wrapped in polyethylene film (PE film) (to prevent the lithium from bonding onto a hole-making apparatus during hole making); and in a third step, the lithium foil wrapped well with the polyethylene film is passed through a roller press at a uniform speed, a surface of one roller in the roller press is provided with short and dense spikes, a proper roller slit is provided as desired, and the lithium foil may be passed through the roller slit to manufacture a lithium foil with many holes.

When the prelithiation layer 1234 is of dense and continuous layer structure, after the electrode assembly 123 is wound to shape, the nonreactive region 12321 covered by the prelithiation layer 1234 cannot be fully impregnated by an electrolyte as result, this would cause a large amount of lithium on the prelithiation layer 1234 may be exposed to the surface of the nonreactive region 12321 for a long time, accelerating consumption of the electrolyte, and aggravating gas production of secondary battery 12.

With the plurality of through-holes 12343, it is possible to increase porosity of the negative electrode sheet 1232, such that the electrolyte may provide full impregnation, thereby facilitating prolonging service life of the secondary battery 12.

According to some embodiments of the present application, prelithiation area of the prelithiation layer 1234 is $S_1$, the sum of cross-sectional areas of all through-holes 12343 in the prelithiation layer 1234 is $S_2$, and $S_2$ meets the following condition: $5\%S_1 \leq S_2 \leq 50\%S_1$.

Cross-sectional area of the through-holes 12343 refers to sectional area of a plane where an opening parallel to the through-holes 12343 is located. The summation of cross-sectional areas among all the through-holes 12343 refers to the sum of cross-sectional areas among all the through-holes 12343.

The larger the summation of the cross-sectional areas among all the through-holes 12343, the more sufficient the impregnation of the electrolyte, and then the prelithiation layer 1234 is able to intercalate to a negative electrode film layer overlapping therewith more quickly and form a stable structure. Of course, as the summation of the cross-sectional areas among all the through-holes 12343 is larger, a reduction in effective prelithiation area of the prelithiation layer 1234 may be caused. The effective prelithiation area of the prelithiation layer 1234 refers to: a difference between the prelithiation area $S_1$ of the prelithiation layer 1234 and the sum $S_2$ of the cross-sectional areas of all through-holes 12343 in the prelithiation layer 1234.

With $S_2$ meeting the following condition: $5\%S_1 \leq S_2 \leq 50\%S_1$, an electrolyte is enabled to provide full impregnation while the prelithiation need can be satisfied, thereby facilitating further improvement in the initial coulombic efficiency, cycling performance, and storage performance of the secondary battery 12.

According to some embodiments of the present application, S2 meets the following condition: $20\%S1 \leq S2 \leq 30\%S1$.

In such embodiments, the electrolyte has good impregnating and prelithiation effects.

The performances of the secondary battery 12 are explained via 22 Examples and 2 Comparative Examples below.

| Examples | negative electrode film layer material | Prelithiation layer | | | | | | Performance tested | | | |
| | | Material | Setting Status | Percentage that sum of cross-sectional areas of all throughholes accounts for prelithiation area of prelithiation layer | $Q_{Li}$ | | $S_{Li}$ | First coulombic efficiency (%) | Reversible capacity retention % after storage for 180 days at 45°C | Cycle count for capacity retention of 80% | Prelithiation layer utilization % |
| | | | | | $Q_1$ | $Q_2$ | | | | | |
| Example 1 | Synthetic graphite | Lithium foil | With through-holes | 25 | 0.18%Q | 0.12%Q | 0.3%Q ÷ 80%$C_{negative}$ | 91.2 | 89.1 | 2057 | 92.3 |
| Example 2 | Synthetic graphite | Lithium foil | With through-holes | 25 | 0.3%Q | 0.2%Q | 0.5%Q ÷ 80%$C_{negative}$ | 91.6 | 89.5 | 2100 | 92.2 |
| Example 3 | Synthetic graphite | Lithium foil | With through-holes | 25 | 1.2%Q | 0.8%Q | 2%Q ÷ 80%$C_{negative}$ | 92.0 | 90.2 | 2218 | 89.7 |
| Example 4 | Synthetic graphite | Lithium foil | With through-holes | 25 | 2.4%Q | 1.6%Q | 4%Q ÷ 80%$C_{negative}$ | 92.4 | 91.2 | 2420 | 88.5 |
| Example 5 | Synthetic graphite | Lithium foil | With through-holes | 25 | 3.6%Q | 2.4%Q | 6%Q ÷ 80%$C_{negative}$ | 92.6 | 91.4 | 2462 | 86.3 |
| Example 6 | Synthetic graphite | Lithium foil | With through-holes | 25 | 6.0%Q | 4.0%Q | 10%Q ÷ 80%$C_{negative}$ | 92.4 | 91.5 | 2468 | 68.2 |
| Example 7 | Synthetic graphite | Lithium foil | With through-holes | 25 | 7.2%Q | 4.8%Q | 12%Q ÷ 80%$C_{negative}$ | 92.3 | 91.5 | 2420 | 59.3 |
| Example 8 | Synthetic graphite | Lithium foil | With through-holes | 5 | 2.4%Q | 1.6%Q | 4%Q ÷ 80%$C_{negative}$ | 92.0 | 90.7 | 2355 | 87.9 |

(continued)

| Examples | negative electrode film layer material | Prelithiation layer | | | | | | Performance tested | | | |
|---|---|---|---|---|---|---|---|---|---|---|---|
| | | Material | Setting Status | Percentage that sum of cross-sectional areas of all throughholes accounts for prelithiation area of prelithiation layer | $Q_{Li}$ | | $S_{Li}$ | First coulombic efficiency (%) | Reversible capacity retention % after storage for 180 days at 45°C | Cycle count for capacity retention of 80% | Prelithiation layer utilization % |
| | | | | | $Q_1$ | $Q_2$ | | | | | |
| Example 9 | Synthetic graphite | Lithium foil | With through-holes | 20 | 2.4%Q | 1.6%Q | $4\%Q \div 80\% C_{negative}$ | 92.2 | 91.1 | 2379 | 88.3 |
| Example 10 | Synthetic graphite | Lithium foil | With through-holes | 30 | 2.4%Q | 1.6%Q | $4\%Q \div 80\% C_{negative}$ | 92.5 | 91.3 | 2458 | 88.7 |
| Example 11 | Synthetic graphite | Lithium foil | With through-holes | 50 | 2.4%Q | 1.6%Q | $4\%Q \div 80\% C_{negative}$ | 92.6 | 91.5 | 2478 | 88.8 |
| Example 12 | Synthetic graphite | Lithium foil | With through-holes | 25 | 2.4%Q | 1.6%Q | $4\%Q \div 10\% C_{negative}$ | 91.3 | 89.3 | 2075 | 32.2 |
| Example 13 | Synthetic graphite | Lithium foil | With through-holes | 25 | 2.4%Q | 1.6%Q | $4\%Q \div 20\% C_{negative}$ | 91.6 | 90.2 | 2215 | 50.8 |
| Example 14 | Synthetic graphite | Lithium foil | With through-holes | 25 | 2.4%Q | 1.6%Q | $4\%Q \div 120\% C_{negative}$ | 92.2 | 91.5 | 2408 | 89.1 |
| Example 15 | Synthetic graphite | Lithium foil | With through-holes | 25 | 2.4%Q | 1.6%Q | $4\%Q \div 130\% C_{negative}$ | 92.3 | 91.4 | 2309 | 87.6 |
| Example 16 | Synthetic graphite | Aluminumlithium alloy | Continuous dense | 0 | 2.4%Q | 1.6%Q | $4\%Q \div 80\% C_{negative}$ | 91.8 | 90.5 | 2319 | 87.5 |

(continued)

| Examples | negative electrode film layer material | Prelithiation layer | | | | | | Performance tested | | | |
|---|---|---|---|---|---|---|---|---|---|---|---|
| | | Material | Setting Status | Percentage that sum of cross-sectional areas of all throughholes accounts for prelithiation area of prelithiation layer | $Q_{Li}$ | | $S_{Li}$ | First coulombic efficiency (%) | Reversible capacity retention % after storage for 180 days at 45°C | Cycle count for capacity retention of 80% | Prelithiation layer utilization % |
| | | | | | $Q_1$ | $Q_2$ | | | | | |
| Example 17 | Synthetic graphite | Lithium foil | Continuous dense | 0 | 2.4%Q | 1.6 %Q | 4%Q ÷ 80% $C_{neg}$ ative | 91.8 | 90.4 | 2322 | 87.6 |
| Example 18 | Synthetic graphite | Lithium foil | Intermittent strip shape | 0 | 2.4%Q | 1.6 %Q | 4%Q ÷ 80% $C_{neg}$ ative | 92.0 | 90.8 | 2378 | 88.0 |
| Example 19 | Synthetic graphite | Lithium foil | Intermittent patch shape | 0 | 2.4%Q | 1.6 %Q | 4%Q ÷ 80% $C_{neg}$ ative | 92.0 | 90.9 | 2377 | 88.0 |
| Example 20 | Synthetic graphite | Lithium foil | With through-holes | 25 | 4%Q | / | 4%Q ÷ 80% $C_{neg}$ ative | 91.7 | 90.5 | 2318 | 85.2 |
| Example 21 | Synthetic graphite | Lithium foil | With through-holes | 25 | / | 4% Q | 4%Q ÷ 80% $C_{neg\ ative}$ | 91.7 | 89.9 | 2221 | 79.2 |
| Example 22 | Synthetic graphite | Lithium foil | With through-holes | 25 | 2.0%Q | 2.0 %Q | 4%Q ÷ 80% $C_{neg}$ ative | 92.1 | 90.9 | 2376 | 88.1 |

(continued)

| Examples | negative electrode film layer material | Prelithiation layer | | | | | | Performance tested | | | |
|---|---|---|---|---|---|---|---|---|---|---|---|
| | | Material | Setting Status | Percentage that sum of cross-sectional areas of all throughholes accounts for prelithiation area of prelithiation layer | $Q_{Li}$ | | $S_{Li}$ | First coulombic efficiency (%) | Reversible capacity retention % after storage for 180 days at 45°C | Cycle count for capacity retention of 80% | Prelithiation layer utilization % |
| | | | | | $Q_1$ | $Q_2$ | | | | | |
| Example 23 | 85% synthetic graphite mixed with 15% silicon monoxide | Lithium foil | With through-holes | 25 | 2.4% Q | 1.6 %Q | $4\%Q \div 80\% C_{neg\ ative}$ | 89.1 | 88.2 | 859 | 89.2 |
| Comparative example 1 | Synthetic graphite | / | / | / | / | / | / | 91.1 | 88.9 | 2017 | / |
| Comparative Example 2 | 85% synthetic graphite mixed with 15% silicon monoxide | / | / | / | / | / | / | 87.2 | 85.1 | 708 | / |

It can be seen from the above Examples and Comparative Examples that, the initial coulombic efficiency of the negative electrode sheet 1232 provided with a prelithiation layer 1234 is higher than that of the negative electrode sheet 1232 provided with no prelithiation layer 1234, and capacity retention of the negative electrode sheet 1232 provided with the prelithiation layer 1234 is higher than that of the negative electrode sheet 1232 provided with no prelithiation layer 1234. With the increase in Q1 and Q2, both the initial coulombic efficiency and capacity retention of the negative electrode sheet 1232 are increased. With the increase in the percentage that the sum of the cross-sectional areas of all through-holes 12343 in the prelithiation layer 1234 accounts for prelithiation area of the prelithiation layer 1234, both the initial coulombic efficiency and capacity retention of the negative electrode sheet 1232 are increased.

In a second aspect, the present application further provides a battery 10, including a secondary battery 12 of any one of the embodiments described above.

In a third aspect, the present application provides a power consuming device, including a battery 10 of any one of the embodiments above, the battery 10 being used to provide electrical energy, or including a secondary battery 12 of any one of the embodiments above, the secondary battery 12 being used to provide electrical energy.

According to some embodiments of the present application, the present application provides a secondary battery 12, the secondary battery 12 includes an electrode assembly 123, the electrode assembly 123 includes: at least one positive electrode sheet 1231 and at least one negative electrode sheet 1232, a negative electrode film layer of the at least one negative electrode sheet 1232 having a nonreactive region 12321 thereon, the nonreactive region 12321 being not opposite a positive electrode film layer on the positive electrode sheet 1231 disposed adjacent to the negative electrode sheet 1232 where the nonreactive region is located, and the at least one nonreactive region 12321 is provided with a prelithiation layer 1234 thereon; wherein total capacity of the secondary battery 12 is Q, the total capacity from prelithiation of all the prelithiation layers 1234 is $Q_{Li}$, and $Q_{Li}$ meets the following condition: $2\%Q \leq Q_{Li} \leq 6\%Q$.

In such a secondary battery 12, the initial coulombic efficiency, cycling performance, and storage performance of the secondary battery 12 can be improved, and further, the prelithiation layer 1234 has a high utilization rate.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

The various technical features of the above embodiments can be combined in any manner, and in order to simplify the description, not all possible combinations of the various technical features of the above embodiments are described. However, the technical features should be considered to be within the scope of the description in the specification, as long as there is no conflict between the combinations of the technical features.

The embodiments described above merely illustrate several implementations of the present application and are described relatively specifically and in detail, but should not be construed as limiting the patent scope of the present application. It should be noted that those of ordinary skill in the art can make some variations and improvements without departing from the concept of the present application, and the variations and improvements fall within the scope of protection of the present application.

**Claims**

1. A secondary battery, comprising an electrode assembly, the electrode assembly comprising: at least one positive electrode sheet and at least one negative electrode sheet, a negative electrode film layer of the at least one negative electrode sheet having a nonreactive region thereon, the nonreactive region being not opposite a positive electrode film layer on the positive electrode sheet disposed adjacent to the negative electrode sheet where the nonreactive region is located, and the at least one nonreactive region being provided with a prelithiation layer;
   wherein total capacity of the secondary battery is Q, total capacity from prelithiation of all the prelithiation layers is $Q_{Li}$, and $Q_{Li}$ meets the following condition: $0.5\%Q \leq Q_{Li} \leq 10\%Q$.

2. The secondary battery according to claim 1, wherein the prelithiation layer is a layer of elemental lithium metal.

3. The secondary battery according to claim 1, wherein $Q_{Li}$ meets the following condition: $2\%Q \leq Q_{Li} \leq 6\%Q$.

4. The secondary battery according to claim 1, wherein the electrode assembly comprises a separator, and the electrode assembly is configured as a stack structure formed by stacking positive electrode sheets, the separator, and negative electrode sheets;
   among all the positive electrode sheets and all the negative electrode sheets, a surface of an outermost negative electrode film layer in the outermost negative electrode sheet forms a nonreactive region, and a prelithiation layer covers the nonreactive region.

5. The secondary battery according to claim 1, wherein the electrode assembly comprises a separator, and the electrode assembly is configured as a winding structure formed by winding positive electrode sheets, the separator, and negative electrode sheets;

the electrode assembly comprises a starting winding segment and an ending winding segment, among all the positive electrode sheets and all the negative electrode sheets of the starting winding segment, a surface of an innermost negative electrode film layer in the innermost negative electrode sheet, and/or, among all the positive electrode sheets and all the negative electrode sheets of the ending winding segment, a surface of an outermost negative electrode film layer in the outermost negative electrode sheet, forms a nonreactive region, and the nonreactive region on at least one of the starting winding segment and the ending winding segment is provided with a prelithiation layer.

6. The secondary battery according to claim 5, wherein each nonreactive region in the starting winding segment and the ending winding segment is provided with the prelithiation layer, total capacity from prelithiation of all the prelithiation layers arranged on the starting winding segment is $Q_1$, total capacity from prelithiation of all the prelithiation layers arranged on the ending winding segment is $Q_2$, where $Q_{Li} = Q_1 + Q_2$, and $Q_1 > Q_2$.

7. The secondary battery according to claim 1, wherein total area of prelithiation of all the prelithiation layers is $S_{Li}$, capacity per unit area in a negative electrode film layer on a single side of each negative electrode sheet is $C_{negative}$, and $S_{Li}$ meets the following condition:

$$Q_{Li}/120\% \ C_{negative} \leq S_{Li} \leq Q_{Li}/20\% C_{negative}.$$

8. The secondary battery according to claim 7, wherein $S_L$, meets the following condition:

$$Q_{Li}/90\% \ C_{negative} \leq S_{Li} \leq Q_{Li}/50\% C_{negative}.$$

9. The secondary battery according to claim 1, wherein the prelithiation layer comprises:

a plurality of first prelithiation units arranged in a spaced manner along a lengthwise direction of the negative electrode sheet where the first prelithiation units are located; and/or
a plurality of second prelithiation units arranged in a spaced manner along a transverse direction of the negative electrode sheet where the second prelithiation units are located.

10. The secondary battery according to claim 9, wherein each first prelithiation unit extends, along the transverse direction of the negative electrode sheet where the first prelithiation unit is located, to two opposing edges of the negative electrode sheet.

11. The secondary battery according to claim 10, wherein each second prelithiation unit comprises a plurality of prelithiation portions, each prelithiation portion is in patch shape, all the prelithiation portions of each second prelithiation unit are arranged in a spaced manner along a lengthwise direction of the negative electrode sheet where it is located.

12. The secondary battery according to claim 1, wherein the prelithiation layer is configured as a layer structure continuously extending along a lengthwise direction of the negative electrode sheet where the prelithiation layer is located.

13. The secondary battery according to claim 12, wherein the prelithiation layer is provided with a plurality of through-holes.

14. The secondary battery according to claim 13, wherein prelithiation area of the prelithiation layer is $S_1$, the sum of cross-sectional areas among all the through-holes in the prelithiation layer is $S_2$, and $S_2$ meets the following condition: $5\% S_1 \leq S_2 \leq 50\% S_1$.

15. The secondary battery according to claim 14, wherein $S_2$ meets the following condition: $20\% S_1 \leq S_2 \leq 30\% S_1$.

16. A battery, comprising a secondary battery according to any one of claims 1 to 15.

17. A power consuming device, comprising a battery according to claim 16, the battery being used to provide electrical energy; or
comprising a secondary battery according to any one of claims 1 to 15, the battery being used to provide electrical energy.

1

*FIG. 1*

*FIG. 2*

12    122    123    123    121

FIG. 3

123    g    h    a    f    1233    m    i    j    o    p    b    k    e    c    d    1231    1232

FIG. 4

1232

12341     12322

12321

12341

*FIG. 5*

1232

12322

12321

123421   123421

12342

*FIG. 6*

FIG. 7

FIG. 8

## INTERNATIONAL SEARCH REPORT

| | International application No. |
| --- | --- |
| | **PCT/CN2022/110842** |

### A. CLASSIFICATION OF SUBJECT MATTER

H01M 4/13(2010.01)i; H01M 4/62(2006.01)n; H01M 10/0525(2010.01)n

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 电池, 电芯, 芯, 极组, 堆叠, 负极, 阳极, 负电极, 正极, 阴极, 正电极, 补锂, 嵌锂, 锂片, 锂粉, 活性, 容量, battery, cell, core, electrode, positive, negative, anode, cathode, assembly, stack, lithium, supplement, replenish, intercalation, embedded, plate, powder, active, material, capacity

### C. DOCUMENTS CONSIDERED TO BE RELEVANT

| Category* | Citation of document, with indication, where appropriate, of the relevant passages | Relevant to claim No. |
| --- | --- | --- |
| X | CN 1770545 A (SANYO ELECTRIC CO., LTD.) 10 May 2006 (2006-05-10) description, page 2, page 3 to page 15, line 30, and figures 1 and 2 | 1-3, 5-12, 16, 17 |
| Y | CN 1770545 A (SANYO ELECTRIC CO., LTD.) 10 May 2006 (2006-05-10) description, page 2, page 3 to page 15, line 30, and figures 1 and 2 | 4, 13-15 |
| Y | CN 114597383 A (BYD CO., LTD.) 07 June 2022 (2022-06-07) description, paragraphs 16-35, and figures 1-2 | 4, 13-15 |
| X | CN 111312987 A (NINGDE CONTEMPORARY AMPEREX TECHNOLOGY CO., LTD.) 19 June 2020 (2020-06-19) description, paragraphs 4-179, and figures 1-5 | 1-3, 5-8, 12, 16, 17 |
| Y | CN 111312987 A (NINGDE CONTEMPORARY AMPEREX TECHNOLOGY CO., LTD.) 19 June 2020 (2020-06-19) description, paragraphs 4-179, and figures 1-5 | 4, 9-11, 13-15 |
| Y | CN 111384405 A (NINGDE CONTEMPORARY AMPEREX TECHNOLOGY CO., LTD.) 07 July 2020 (2020-07-07) description, paragraphs 29-205, and figures 1-6 | 9-11 |

☑ Further documents are listed in the continuation of Box C.  ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
| --- | --- |
| **03 December 2022** | **20 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

EP 4 510 206 A1

**INTERNATIONAL SEARCH REPORT**

International application No.

**PCT/CN2022/110842**

| C. | DOCUMENTS CONSIDERED TO BE RELEVANT | |
|---|---|---|
| Category* | Citation of document, with indication, where appropriate, of the relevant passages | Relevant to claim No. |
| A | CN 107851523 A (TAIYO YUDEN CO., LTD.) 27 March 2018 (2018-03-27)<br>entire document | 1-17 |
| A | JP 2010287641 A (NEC TOKIN CORP.) 24 December 2010 (2010-12-24)<br>entire document | 1-17 |

Form PCT/ISA/210 (second sheet) (January 2015)

28

## INTERNATIONAL SEARCH REPORT
### Information on patent family members

International application No.

**PCT/CN2022/110842**

| Patent document cited in search report | | | Publication date (day/month/year) | Patent family member(s) | | | Publication date (day/month/year) |
|---|---|---|---|---|---|---|---|
| CN | 1770545 | A | 10 May 2006 | US | 2006110660 | A1 | 25 May 2006 |
| | | | | JP | 2006156330 | A | 15 June 2006 |
| CN | 114597383 | A | 07 June 2022 | WO | 2022117080 | A1 | 09 June 2022 |
| CN | 111312987 | A | 19 June 2020 | EP | 3886210 | A1 | 29 September 2021 |
| | | | | US | 2021305633 | A1 | 30 September 2021 |
| | | | | WO | 2020118884 | A1 | 18 June 2020 |
| | | | | CN | 113571778 | A | 29 October 2021 |
| CN | 111384405 | A | 07 July 2020 | WO | 2020133671 | A1 | 02 July 2020 |
| | | | | US | 2022069284 | A1 | 03 March 2022 |
| | | | | EP | 3905396 | A1 | 03 November 2021 |
| CN | 107851523 | A | 27 March 2018 | US | 2018174765 | A1 | 21 June 2018 |
| | | | | WO | 2017010129 | A1 | 19 January 2017 |
| | | | | JP | WO2017010129 | A1 | 19 April 2018 |
| JP | 2010287641 | A | 24 December 2010 | None | | | |

Form PCT/ISA/210 (patent family annex) (January 2015)